# EUROPEAN PATENT SPECIFICATION

(11) **EP 4 170 531 B1**
(45) Date of publication and mention of the grant of the patent: **24.12.2025**
(21) Application number: 21868538.6
(22) Date of filing: 08.09.2021
(51) Int. Cl.: G06F 21/60, G06F 21/62, G06Q 50/00, H04L 9/40, G06Q 10/10, G06Q 10/101

(54) **INFORMATION PROCESSING METHOD AND APPARATUS, DEVICE, AND STORAGE MEDIUM**
INFORMATIONSVERARBEITUNGSVERFAHREN UND -VORRICHTUNG, VORRICHTUNG UND SPEICHERMEDIUM
PROCÉDÉ ET APPAREIL DE TRAITEMENT D'INFORMATIONS, DISPOSITIF ET SUPPORT D'ENREGISTREMENT

(30) Priority: 15.09.2020 CN 202010969728
(43) Date of publication of application: 26.04.2023
(73) Proprietor: Beijing Zitiao Network Technology Co., Ltd., Beijing 100190 (CN)
(72) Inventor: WU, Yiying, Beijing 100190 (CN)
(74) Representative: Marks & Clerk LLP
(86) International application number: PCT/CN2021/117274
(87) International publication number: WO 2022/057713

(56) References cited:
- CN-A- 104 487 967
- CN-A- 106 657 525
- CN-A- 109 005 422
- CN-A- 110 708 294
- CN-A- 111 343 073
- CN-A- 112 069 524
- US-A1- 2010 205 179
- US-A1- 2011 004 922
- US-A1- 2013 297 691

## Description

### TECHNICAL FIELD

Embodiments of the present disclosure relates to the field of computer technologies, and in particular, to an information processing method and apparatus, a device and a storage medium.

### BACKGROUND

With the development of science and technology, more and more interactive scenarios can be presented by applications. For example, interactions in public domain traffic scenarios and interactions in pure private domain traffic scenarios.

At present, the interaction in a public domain traffic scenario can be viewed by any object, and the implementation form of interaction in a pure private domain traffic scenario is "the comments under my creations are only visible by mutual friends of me and the commenter".

However, a user has no sense of privacy for an interaction in the public domain traffic scenario; while for an interaction in a pure private domain traffic scenarios, the user has a sense of privacy, but only mutual friends of the user and a commenter can view it. Therefore, existing technologies cannot achieve a balance between visibility in public domain traffic scenarios and private domain traffic scenarios, which are limited, and thus fail to meet the personalized needs of users and affect the user experience.

The document US2011004922A1 discloses customized content sharing techniques. In an implementation, an input is accepted that describes a particular type of content. The input is provided via selection of one or more privacy settings for a user of a social network service. The input is also used to control which other users of the social network service are permitted to communicate content to the user.

The document US2013297691A1 discloses configurations for providing comments restricted to a set of users for web content on a web page.

The document US2010205179A1 discloses a method of determining a relative strength of a connection between two entities utilizing a social networking system, said method including the steps of: calculating a quantitative index regarding the connection utilizing at least one quantitative factor; calculating a qualitative index regarding the connection utilizing at least one qualitative factor; calculating the relative strength of the connection utilizing the quantitative index and the qualitative index.

### SUMMARY

Embodiments of the present disclosure provides an information processing method and apparatus, a device and a storage medium, which can achieve a balance between visibility in public domain traffic scenarios and private domain traffic scenarios, and is flexible, thus meeting the personalized needs of users and improving the user experience. The present disclosure is defined in appended set of claims.

In a first aspect, an embodiment of the present disclosure provides an information processing method, where a user is provided with a target application for publishing a creation through a terminal device, the target application includes a first switch, and the method includes:
performing a first authorization operation for a respective creation published by the user on the target application in response to an enabling trigger operation acting on the first switch, where the first authorization operation is a target authorization operation matching the first switch;
where the first authorization operation is used to represent that the user, a commenter corresponding to comment information under the respective creation published by the user on the target application, and a friend of the commenter are granted permission to view the respective creation and each piece of comment information under the respective creation; and the friend of the commenter is used to represent an associated object associated with an account of the commenter.

In a second aspect, an embodiment of the present disclosure provides an information processing method, where a user is provided with a target application for publishing a creation through a terminal device, the target application includes a second switch, and the method includes:
performing a second authorization operation for a target creation published by the user on the target application, in response to an enabling trigger operation acting on the second switch, where the target creation is any of all creations published by the user on the target application;
where the second authorization operation is used to represent that the user, a target commenter corresponding to comment information under the target creation and a friend of the target commenter are granted permission to view the target creation and the comment information under the target creation, and the friend of the target commenter is used to represent an associated object associated with an account of the target commenter.

In a third aspect, an embodiment of the present disclosure provides an information processing method, where a user is provided with a target application for publishing a creation through a terminal device, the target application includes a third switch, and the method includes:
performing a third authorization operation for a target object, in response to an enabling trigger operation acting on the third switch, where the third authorization operation is a target authorization operation matching the third switch;
where the third authorization operation is used to represent that the target object is granted permission to view a respective creation commented by a friend of the target object and comment information under the respective creation, and the target object is any object.

In a fourth aspect, an embodiment of the present disclosure provides an information processing apparatus, where a user is provided with a target application for publishing a creation through a terminal device, the target application includes a first switch, and the apparatus includes:
a first authorization module, configured to perform a first authorization operation for a respective creation published by the user on the target application, in response to an enabling trigger operation acting on the first switch, where the first authorization operation is a target authorization operation matching the first switch;
where the first authorization operation is used to represent that the user, a commenter corresponding to comment information under the respective creation published by the user on the target application, and a friend of the commenter are granted permission to view the respective creation and each piece of comment information under the respective creation;
and the friend of the commenter is used to represent an associated object associated with an account of the commenter.

In a fifth aspect, an embodiment of the present disclosure provides an information processing apparatus, where a user is provided with a target application for publishing a creation through a terminal device, the target application includes a second switch, and the apparatus includes:
a second authorization module, configured to perform a second authorization operation for a target creation published by the user on the target application, in response to an enabling trigger operation acting on the second switch, and the target creation is any of all creations published by the user on the target application
where the second authorization operation is used to represent that the user, a target commenter corresponding to comment information under the target creation and a friend of the target commenter are granted permission to view the target creation and the comment information under the target creation, and the friend of the target commenter is used to represent an associated object associated with an account of the target commenter.

In a sixth aspect, an embodiment of the present disclosure provides an information processing apparatus, where a user is provided with a target application for publishing a creation through a terminal device, the target application includes a third switch, and the apparatus includes:
a third authorization module, configured to perform a third authorization operation for a target object, in response to an enabling trigger operation acting on the third switch;
where the third authorization operation is used to represent that the target object is granted permission to view a respective creation commented by a friend of the target object and comment information under the respective creation, and the target object is any object.

In a seventh aspect, an embodiment of the present disclosure provides an electronic device,
including: at least one processor; and a memory;
the memory stores computer execution instructions;
the at least one processor executes the computer execution instructions stored in the memory to enable the at least one processor to execute the information processing method according to any one of the first aspect, the second aspect, and the third aspect.

In an eighth aspect, an embodiment of the present disclosure provides a computer-readable storage medium, where the computer-readable storage medium stores computer execution instructions, when the processor executes the computer execution instructions, the information processing method according to any one of the first aspect, the second aspect, and the third aspect is implemented.

In a ninth aspect, an embodiment of the present disclosure provides a computer program product, which includes: a computer program, the computer program is stored in a readable storage medium, at least one processor of an electronic device can read the computer program from the readable storage medium, the at least one processor executes the computer program, so that the electronic device executes the information processing method according to any one of the first aspect, the second aspect, and the third aspect.

In a tenth aspect, an embodiment of the present disclosure further provides a computer program, which is stored in a readable storage medium, at least one processor of an electronic device can read the computer program from the readable storage medium, the at least one processor executes the computer program, so that the electronic device executes the information processing method according to any one of the first aspect, the second aspect, and the third aspect.

The information processing method and apparatus, the device and the storage medium provided by the embodiments of the present disclosure, firstly, a user is provided with a target application for publishing a creation through a terminal device, and the target application may include a first switch, when the user triggers an opening operation of the first switch, in response to an enabling trigger operation acting on the first switch, a respective creation published by the user on the target application is authorized. Specifically, the user, a commenter corresponding to the comment information under each creation, and a friend of the commenter are granted to view a respective creation and its comment information, realizing that social users can also obtain a balanced privacy experience in a comment interaction within public domain traffic.

### BRIEF DESCRIPTION OF DRAWINGS

In order to illustrate technical solutions in embodiments of the present disclosure or the prior art more clearly, accompanying drawings that need to be used in description of the embodiments or the prior art will be briefly introduced below. It is obvious that the accompanying drawings in the following description are some embodiments of the present disclosure, and for those of ordinary skill in the art, other accompanying drawings may also be acquired according to these accompanying drawings without paying any creative efforts.
FIG. 1 is a schematic diagram of a user interface according to an embodiment of the present disclosure.
FIG. 2 is a schematic diagram of a scenario of an information processing method according to an embodiment of the present disclosure.
FIG. 3 is a flowchart of an information processing method according to an embodiment of the present disclosure.
FIG. 4 is a schematic diagram of a scenario of an information processing method according to another embodiment of the present disclosure.
FIG. 5 is a schematic diagram of a scenario of an information processing method according to a yet another embodiment of the present disclosure.
FIG. 6 is a schematic diagram of a scenario of an information processing method according to a still another embodiment of the present disclosure.
FIG. 7 is a schematic diagram of a scenario of an information processing method according to another embodiment of the present disclosure.
FIG. 8 is a schematic diagram of a scenario of an information processing method according to a yet another embodiment of the present disclosure.
FIG. 9 is a schematic diagram of a scenario of an information processing method according to another embodiment of the present disclosure.
FIG. 10 is a schematic diagram of a scenario of an information processing method according to a still another embodiment of the present disclosure.
FIG. 11 is a schematic diagram of a scenario of an information processing method according to a yet another embodiment of the present disclosure.
FIG. 12 is a schematic diagram of a hardware structure of an electronic device according to an embodiment of the present disclosure.

### DESCRIPTION OF EMBODIMENTS

Embodiments of the present disclosure will be described in more detail below with reference to the accompanying drawings. Although some embodiments of the present disclosure are shown in the accompanying drawings, it should be understood that the present disclosure can be implemented in various forms and should not be interpreted as being limited to the embodiments set forth herein. On the contrary, these embodiments are provided for a more thorough and complete understanding of the present disclosure. It should be understood that the accompanying drawings and embodiments of the present disclosure are only for exemplary purposes and are not intended to limit the protection scope of the present disclosure.

It should be understood that various steps described in the method implementations of the present disclosure may be performed in different orders and/or in parallel. Furthermore, method implementations may include additional steps and/or omit performing the shown steps. The scope of the present disclosure is not limited in this regard.

The term "including" and variations thereof used herein are opening inclusions, that is, "including but not limited to". The term "based on" is "at least partially based on". The term "one embodiment" means "at least one embodiment"; the term "another embodiment" means "at least one additional embodiment"; the term "some embodiments" means "at least some embodiments". Relevant definitions of other terms will be given in the following description.

It should be noted that concepts such as "first" and "second" and the like mentioned in the present disclosure are only used to distinguish different apparatuses, modules or units, and are not used to limit the order or interdependence of functions performed by these apparatuses, modules or units.

It should be noted that the modifications of "one" and "a plurality of" mentioned in the present disclosure are schematic rather than restrictive, and those skilled in the art should understand that unless the context clearly indicates, otherwise, the terms should be understood as "one or a plurality of".

The names of messages or information exchanged between a plurality of apparatuses ore modules in the implementations of the present disclosure are only for illustrative purposes, and are not intended to limit the scope of these messages or information.

In the prior art, any object can view the interaction in the public domain traffic scenario, and a user has no sense of privacy, and the implementation form of interaction in a pure private domain traffic scenario is "the comments under my creations are only visible by mutual friends of me and the commenter". Although the user has a sense of privacy, but only mutual friends of the user and a commenter can view it. Therefore, existing technologies cannot achieve a balance between visibility in public domain traffic scenarios and private domain traffic scenarios, and have no flexibility, and thus fail to meet the personalized needs of users and affect the user experience.

In order to solve the above problem, the technical concept of the present disclosure is that a switch can be configured in a target application. When the switch is in an on state, a user, a commenter corresponding to the user's global creation, and a friend of the commenter can be granted a permission to view the creation and comments on the creation, which realizes that social users can also obtain a balanced privacy experience in a comment interaction within a public domain traffic.

In practical applications, an execution subject of an embodiment of the present disclosure can be a terminal device, such as a mobile terminal, a computer device (such as a desktop, a laptop, an all-in-one computer, etc.), and the mobile terminal can include a mobile device such as a smart phone, a handheld computer, a tablet, a wearable device with a display screen, and so on.

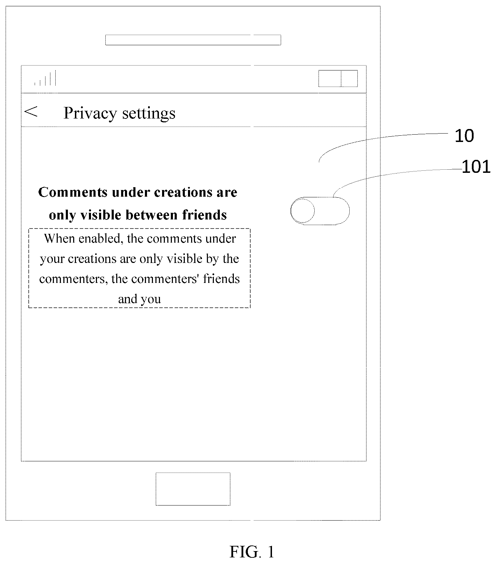

In one scenario, referring to FIG. 1, FIG. 1 is a schematic diagram of a user interface according to an embodiment of the present disclosure. In a target application, a navigation key for setting privacy permission is displayed. Click the navigation key to enter a user interface for setting privacy permission, such as a first user interface 10, on which a first switch 101 is displayed. When the first switch 101 is in an on state, the user, a commenter corresponding to comment information under the respective creation published by the user on the target application, and a friend of the commenter are granted a permission to view the respective creation and each piece of comment information under the respective creation.

The terminal device can provide the user with a client or a webpage of the application, that is, the target application. The user can publish creations on the target application, and any object can view the published creation. The "view" here can be see, check, browse, etc. In order to meet the user's need for interaction in the public domain and privacy in the private domain, the first switch can be in an on state to grant the user, the commenter corresponding to comment information under the respective creation published by the user on the target application, and the friend of the commenter the permission to view each comment information under the respective creation. The present disclosure does not limit the target application.

The technical solution of the present disclosure is described in detail below with specific embodiments. The following specific embodiments can be combined with each other, and the same or similar concepts or processes may not be repeated in some embodiments.

The information processing method may include:
performing a first authorization operation for a respective creation published by the user on the target application, in response to an enabling trigger operation acting on the first switch.

The first authorization operation is used to represent that the user, a commenter corresponding to comment information under the respective creation published by the user on the target application, and a friend of the commenter are granted permission to view the respective creation and each piece of comment information under the respective creation; and the friend of the commenter is used to represent an associated object associated with an account of the commenter. The commenter here can be any object that can view the creation, which can be considered as a friend of the user or not a friend of the user. The friend of the commenter can be a friend of the user or not a friend of the user. The friend of the user refers to an object associated with the account of the user. The commenter is not specifically limited here.

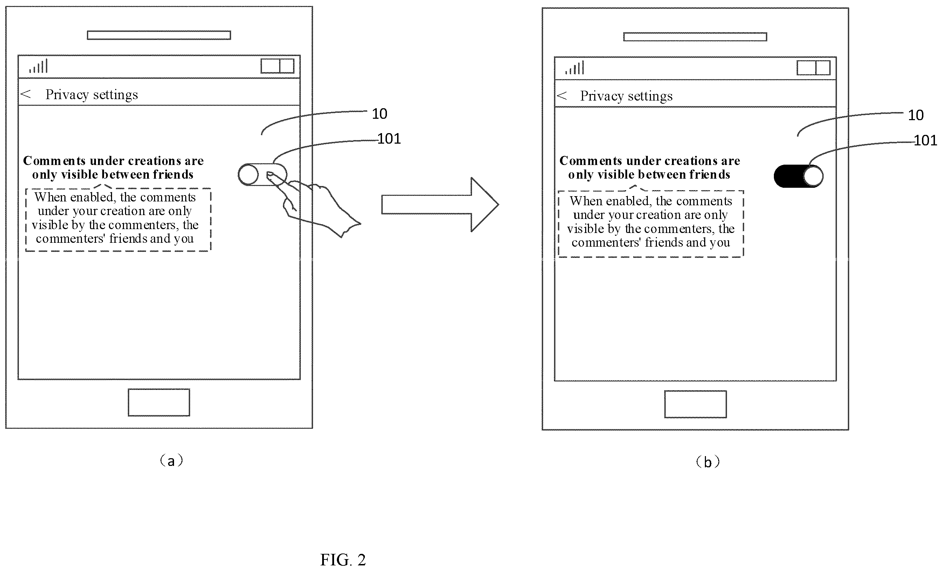

In the embodiment of the present disclosure, in conjunction with FIG. 1, the first user interface 10 includes the first switch 101, and an initial state of the first switch can be an off state. When the user clicks the first switch (as shown in (a) of FIG. 2), the first switch changes from an off state to an on state (as shown in (b) of FIG. 2). At the same time, the user, the commenters of the creation published by the user, and the associated objects associated with accounts of the commenters, namely, the friends of the commenters, are granted the permission to view the respective creation and the comment information under the respective creation.

The text in the figure is only illustrative, which can also be described as "When enabled, your creation and the comments under it are only visible by the commenters, the commenters' friends and you". In practical application, the creations can be viewed at the same time or on the premise that the creations can also be viewed. Although the text description in FIG. 1 or FIG. 2 is "When enabled, the comments under your creation are only visible by the commenters, the commenters' friends and you", but when enabled the first switch, the creation and the comments under the creation will be granted a permission to be viewed by the user, the commenters, the commenters' friends, Therefore, the description of the permission corresponding to the first switch is not specifically limited, as long as the permission conditions of the first switch can be met. The following text parts in the figure corresponding to the second switch, the third switch, etc. are only illustrative, and do not specifically limit the description of the permission corresponding to the second switch, the third switch, etc.

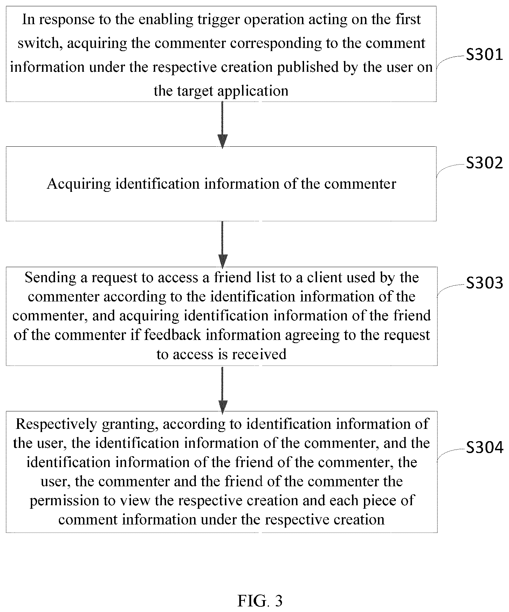

In one embodiment of the present disclosure, as shown in FIG. 3, FIG. 3 is a flowchart of an information processing method according to an embodiment of the present disclosure. The embodiment of the present disclosure gives a detailed description of how to perform a first authorization operation on the basis of the above embodiment. The performing the first authorization operation for a respective creation published by the user on the target application, in response to an enabling trigger operation acting on the first switch includes the following steps.

S301, in response to the enabling trigger operation acting on the first switch, acquiring the commenter corresponding to the comment information under the respective creation published by the user on the target application.

S302, acquiring identification information of the commenter.

S303, sending a request to access a friend list to a client used by the commenter according to the identification information of the commenter, and acquiring identification information of the friend of the commenter if feedback information agreeing to the request to access is received.

S304, respectively granting, according to identification information of the user, the identification information of the commenter, and the identification information of the friend of the commenter, the user, the commenter and the friend of the commenter the permission to view the respective creation and each piece of comment information under the respective creation.

In this embodiment, when the user triggers the enabling trigger operation acting of the first switch, the terminal device can acquire the identification information of all commenters under all creations of the user in the target application. The identification information here can be an account of the commenter, and the commenter here is at least one. Then, for each commenter's account, it sends a request to access a friend list to a client used by the commenter. If the commenter agrees, it acquires other accounts associated with the commenter's account, that is, the commenter's friends' accounts, and grant the commenter's account, the commenter's friends' account, and the user's own account permission to view each creation and the respective comment information under the respective creation.

The information processing method provided by the embodiment of the present disclosure, a user is provided with a target application for publishing a creation through a terminal device, and the target application may include a first switch, when the user triggers an opening operation of the first switch, in response to an enabling trigger operation acting on the first switch, a respective creation published by the user on the target application is authorized. Specifically, the user, a commenter corresponding to the comment information under each creation, and a friend of the commenter are granted to view a respective creation and its comment information, realizing that social users can also obtain a balanced privacy experience in a comment interaction within public domain traffic.

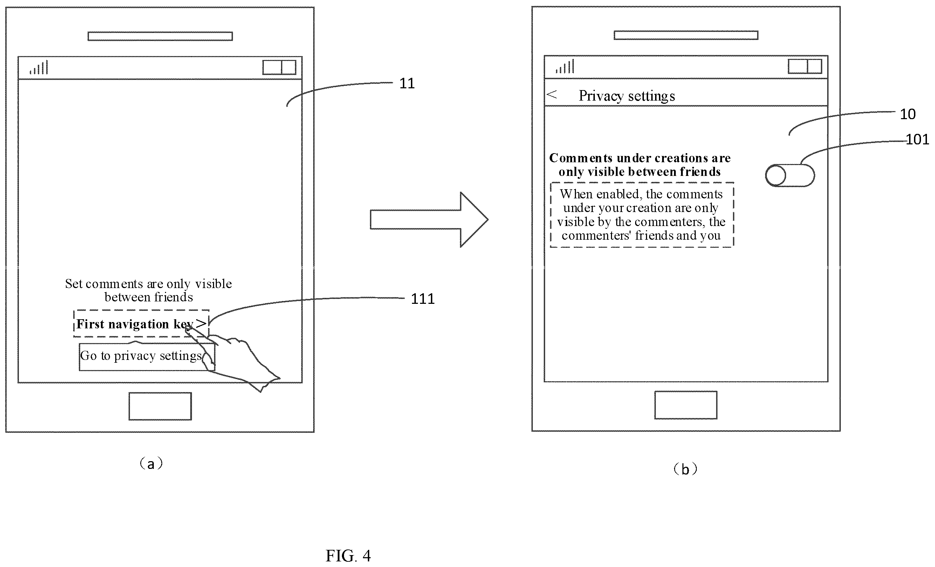

In a scenario, refer to FIG. 4, FIG. 4 is a schematic diagram of a scenario of an information processing method according to another embodiment of the present disclosure. On the basis of the above embodiments, the embodiment of the present disclosure displays, for example, a first navigation key for setting the user's privacy permission for all creations in the target application.

Before in response to an enabling trigger operation acting on the first switch, the method further includes:
in response to a trigger operation of the first navigation key, displaying a first user interface including the first switch, and the first switch is in an off state.

In this embodiment, the user opens the target application, and a first navigation key 111 is configured at a certain position in the target application. The first navigation key can be displayed on a switching page corresponding to the target application, such as a first graphical user interface 11 shown in (a) of FIG. 4. At the same time, navigation information, such as "go to privacy settings" and other information, can be displayed on the first navigation key 111.

Specifically, when the user clicks the first navigation key 111 (as shown in (a) of FIG. 4), the first graphical user interface 11 jumps to the first user interface 10 (as shown in (b) of FIG. 4), and the first switch is displayed on the first user interface. At this time, a state of the first switch can be an off state or an on state. Exemplary, it is usually defaulted that an initial state of the first switch is the off state, as shown in (a) of FIG. 2 or (b) of FIG. 4.

It should be noted that an icon of the first switch and a position of the first switch are not specifically limited. In addition, an interface and a position of the first navigation key in FIG. 4 are only exemplary, and the present disclosure does not make specific restrictions on this, but can customize settings according to actual applications.

Optionally, the first navigation key, and the position of the first navigation key can be customized, or the position of the first navigation key can be flexibly moved, which realizes flexible configuration.

In an embodiment of the present disclosure, an embodiment of the present disclosure gives a detailed description of the information processing method on the basis of the above embodiments. This information processing method can further be realized through the following steps:
a new creation or a historical creation published by the user is used for display on a target terminal device used by an authorization object with permission to view a creation and/or view comment information under the creation.

In practical application, the terminal device can detect dynamic information of the user in the target application in real time through a server, and the dynamic information is used to indicate whether the user has published a creation. When it is detected that a user has published a new creation, the new creation is acquired, and the new creation is pushed to the target terminal device used by the authorized object with the permission to view a creation and/or view comment information under the creation. The new creation or historical creation published by the user is used to display on the target terminal device used by the authorization object with permission to view the creation and/or view comment information under the creation. That is, new creations or historical creations published by the user can be displayed on the target terminal devices used by the authorized objects with the permission of to view the creations and/or comment information under the creations.

In the embodiment of the present disclosure, the user can publish creations on the target application at anytime and anywhere, and the terminal device can monitor the user's dynamics on the target application in real time through the server, that is, detect whether the user has published a creation. When the server detects that a user has published a target creation, it acquires the target creation and pushes the target creation.

The pushed object can be determined according to a specific scenario. For example, when the first switch is in an off state, the target creation can be pushed to everyone, that is, any object. When the first switch is in an on state, the target creation and/or the comment information under the target creation can be simultaneously pushed to objects with the permission to view, such as the users, the commenters, and the commenters' friends.

It should be noted that the above description of the pushed object is only illustrative, and the present disclosure does not specifically limit the pushed object or the pushed scenario.

In an embodiment of the present disclosure, the embodiment of the present disclosure gives a detailed description of the information processing method on the basis of the above embodiments. Each comment information at least includes primary comment information and secondary comment information, and the primary comment information is used to represent initial comment information of users or commenters on the corresponding creations. The secondary comment information is used to represent the information that any first target object comments on the basis of the primary comment information, and the first target object is the user and the commenter.

When the first switch is in an off state, the user and the commenter are granted the permission to view the respective creation and each comment information under the respective creation.

In this embodiment, when the first switch is in an off state, it means that the permission corresponding to the first switch is not turned on, but different from the prior art, that is, the user and the commenter corresponding to the comment information under the respective creation are granted the permission to view the respective creation and each comment information under the respective creation. Or, there could be a scenario where any object is granted to view the respective creation and the initial comment information under the creation commented by the user himself, that is, the primary comment information, but objects other than the users, the commenters, and the commenters' friends cannot view the secondary comment information under the respective creation.

The viewing range of the primary comment information of the author under his own creation equals to the viewing range of the creation, that is, any object can view it. Any object here is the same as the above embodiments, and will not be specifically described here.

Specifically, when the first switch is in an off state, the friend of the commenter is not granted the permission to view each primary comment information and all secondary comment information commented by the commenter under the respective creation.

In this embodiment, when the first switch is in an off state, it means that the permission corresponding to the first switch is not turned on, and the user and the commenter are granted the permission to view the respective creation and each comment information under the respective creation. At the same time, the commenter's friends cannot view each primary comment information and all secondary comment information commented by the commenter under the respective creation.

The viewing range of the secondary comment information of the author under his own creation equals to the viewing range corresponding primary comment information and the mutual friends of the one to be replied.

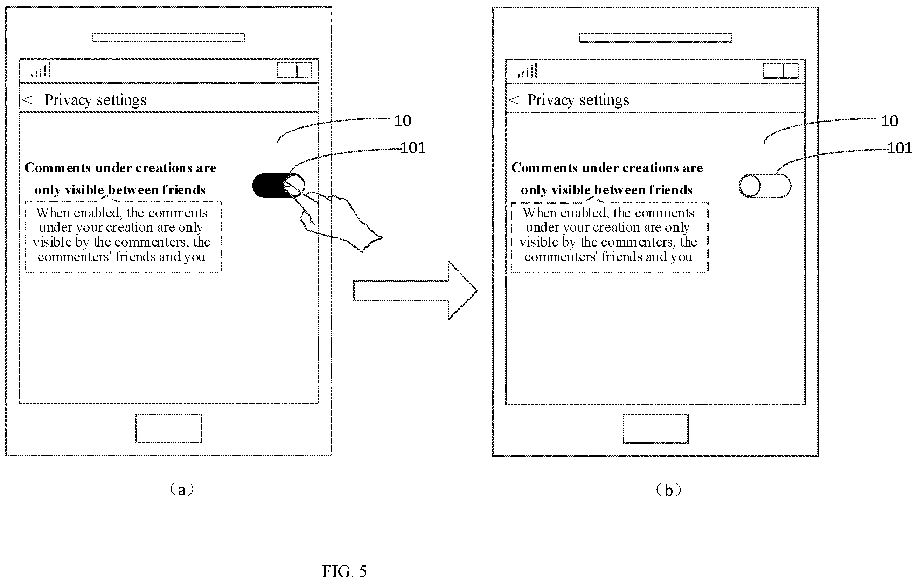

In a scenario, as shown in FIG. 5, FIG. 5 is a schematic diagram of a scenario of an information processing method according to a yet another embodiment of the present disclosure. On the basis of (b) of FIG. 2, the permission corresponding to the first switch can be in an off state by clicking the first switch (as shown in (a) of FIG. 5), and the first switch changes from the on state to the off state (as shown in (b) of FIG. 5 or (a) of FIG. 2). At the same time, the terminal device grants any object the permission to view the respective creation published by the user and/or the primary comment information corresponding to the respective creation published by the user, and doesn't grant the friends of the commenters the permission to view each primary comment information and all secondary commented by the commenter under the respective creation, that is, grants the user and the commenter the permission to view the respective creation and each comment information under the respective creation.

Therefore, the present disclosure adds a switch (such as the first switch). When the switch is in an on state, all comments under the user's creations are only visible by the author of the creation, the commenter and commenter's friends: any comment are only visible by the mutual friends of the commenter and the one to be replied (if any), and the secondary comments are subordinate to the primary comments. That is, if the primary cannot be viewed, all the secondary comments under it also cannot be viewed.

The viewing range of the primary comment of the author under his own creation equals to the viewing range of the creation. The viewing range of the secondary comment published by the author equals to the corresponding primary comment and the mutual friends of the one to be replied (if any).

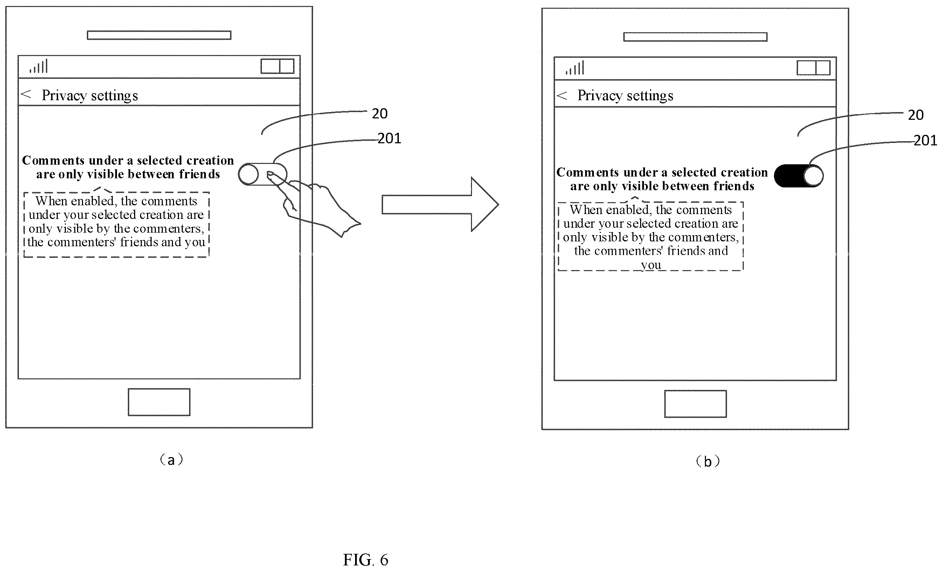

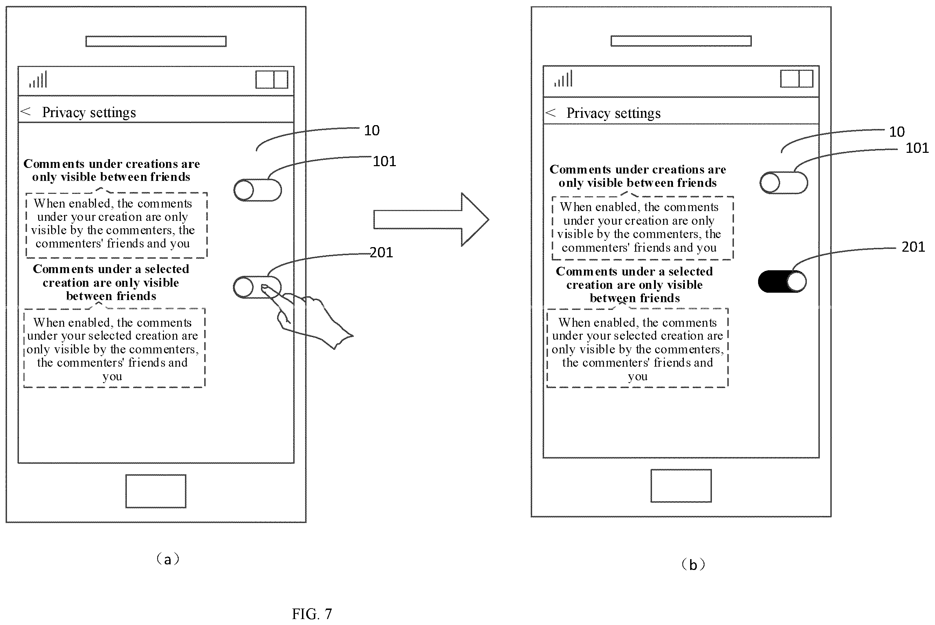

In an embodiment of the present disclosure, permission can also be configured for creation dimension. Specifically, the target application may also include a second switch. Referring to FIG. 6 and FIG. 7, an embodiment of the present disclosure gives a detailed description of the information processing method on the basis of the above embodiments. The information processing method may include:
performing a second authorization operation for a target creation published by the user on the target application, in response to an enabling trigger operation acting on the second switch, where the target creation is any of all creations published by the user on the target application.

The second authorization operation is used to represent that the user, a target commenter corresponding to comment information under the target creation and a friend of the target commenter are granted permission to view the target creation and the comment information under the target creation.

In the embodiment of the present disclosure, if a second user interface is different from the first user interface, as shown in FIG. 6, a second user interface 20 includes a second switch 201, and an initial state of the second switch can be an off state. When the user clicks the second switch (as shown in (a) of FIG. 6), the second switch switches from the off state to an on state (as shown in (b) of FIG. 6). At the same time, the user, the commenters of the creation published by the user, and the associated objects associated with accounts of the commenters, namely, the friends of the commenters, are granted the permission to view the selected creation (target creation) and the comment information under the target creation.

If the second user interface 20 and the first user interface are a same interface, take the first user interface 10 as an example, as shown in FIG. 7, when the user clicks the second switch (as shown in (a) of FIG. 7), the second switch changes from the off state to the on state (as shown in (b) of FIG. 7). Except for different interface displays, the operation process is the same as the embodiments described in FIG. 6, and will not be repeated here.

It should be noted that in one scenario, whether the first switch and the second switch are on the same interface or not, when the second switch is in an on state, the first switch is automatically in an off state. Since a permission range corresponding to the first switch is larger than that corresponding to the second switch, the first switch needs to be in an off state in order to realize the permission corresponding to the second switch. In another scenario, whether the first switch and the second switch are on the same interface or not, when the second switch is in an on state, the first switch may not be in an off state. Since the permission range corresponding to the first switch is larger than that corresponding to the second switch, the terminal device only needs to perform an opening operation corresponding to a switch with smaller permission range. The following third switch has similar effects on the first switch and the second switch, and will not be repeated here.

An author (a user who publishes the creation) can set a switch permission separately for each creation. The effect is: only the commenter and commenter's friends can view the comments under this creation.

In practical application, the second user interface 20 and the first user interface 10 can be the same interface or different interfaces, which can be flexibly configured. In addition, the second switch is similar to the first switch, and an icon of the second switch and a position of the second switch are not specifically limited.

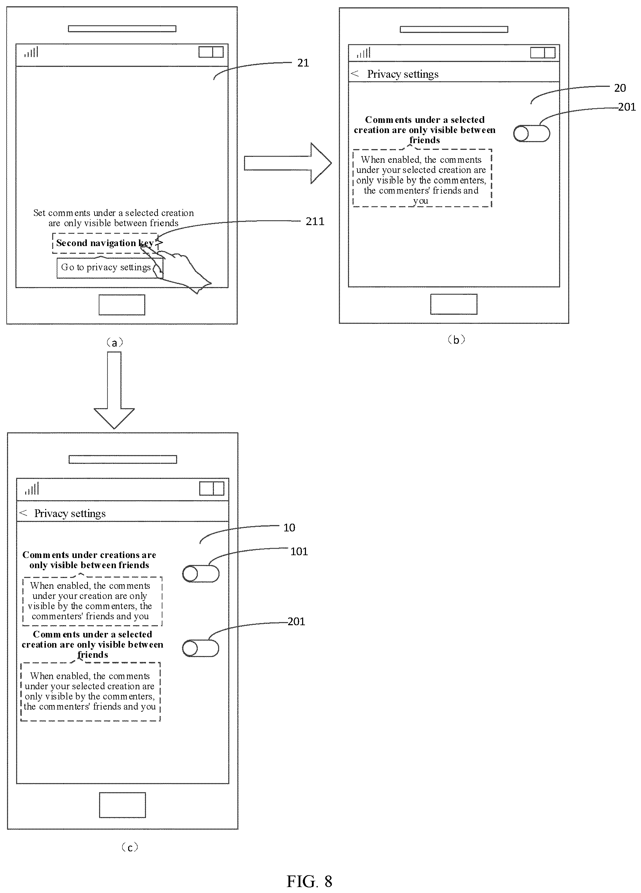

In a scenario, as shown in FIG. 8, FIG. 8 is a schematic diagram of a scenario of an information processing method according to a yet another embodiment of the present disclosure. On the basis of the above embodiments, the embodiment of the present disclosure displays, for example, a second navigation key for setting the privacy permission of the first target creation on an interface where the first target creation is located.

Before in response to an enabling trigger operation acting on the second switch, the method further includes:
in response to a trigger operation of the second navigation key, displaying a second user interface including the second switch, and the second switch is in an off state.

In this embodiment, the user opens the selected creation, that is, the target creation, and a second navigation key 211 is configured at a certain position under the target creation. The second navigation key 211 can be displayed on the interface where the first target creation is located, that is, the second graphical user interface, such as a second graphical user interface 21 shown in FIG. 8 (a). At the same time, navigation information, such as "go to privacy settings" and other information, can be displayed on the second navigation key.

Specifically, when the user clicks the first navigation key (as shown (a) of FIG. 8), the second graphical user interface 21 jumps to the second user interface 20 (as shown in (b) of FIG. 8) or the first user interface 11 (as shown (c) of FIG. 8), and the second switch is displayed on the second user interface. At this time, a state of the second switch can be an off state or an on state. Exemplary, it is usually defaulted that an initial state of the second switch is an off state.

It should be noted that an icon of the second switch and a position of the second switch are not specifically limited. In addition, an interface and a position of the second navigation key in FIG. 8 are only exemplary, and the present disclosure does not make specific restrictions on this, but can customize settings according to actual applications.

Optionally, the second navigation key, and the position of the second navigation key can be customized, or the position of the second navigation key can be flexibly moved, which realizes flexible configuration.

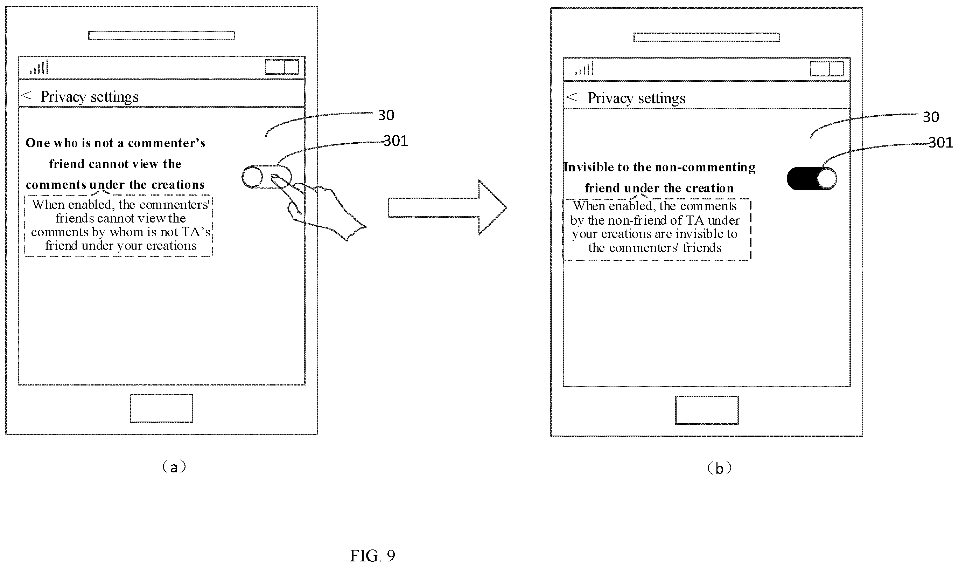

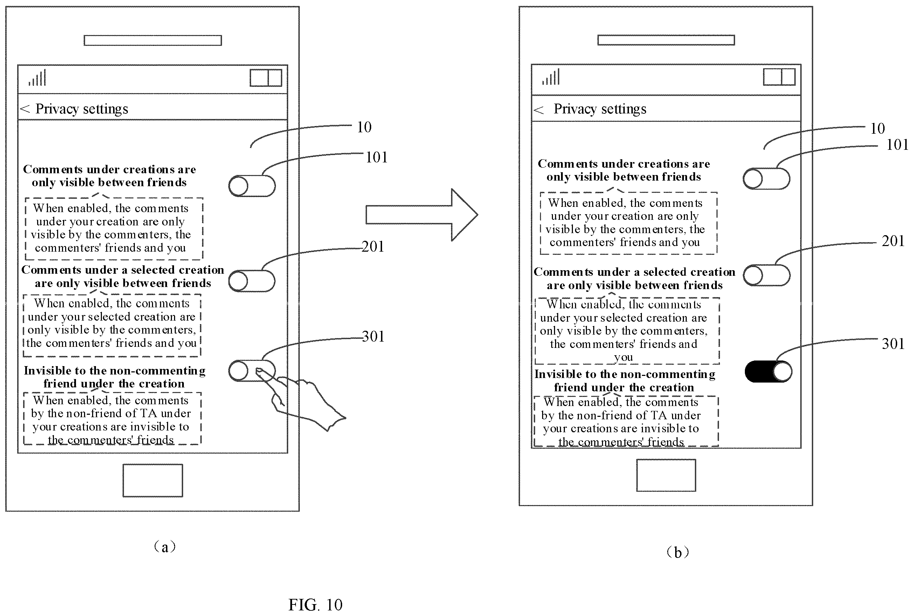

In one embodiment of the present disclosure, permission can also be configured for the user dimension. Specifically, the target application can also include a third switch, as shown in FIG. 9 and FIG. 10, an embodiment of the present disclosure gives a detailed description of the information processing method on the basis of the above embodiments. The information processing method may include:
performing a third authorization operation for a target object, in response to an enabling trigger operation acting on the third switch, where the third authorization operation is a target authorization operation matching the third switch.

The third authorization operation is used to represent that the target object is granted permission to view a respective creation commented by a friend of the target object and comment information under the respective creation, and the target object is any object.

In an embodiment of the present disclosure, if a third user interface is different from the first user interface, as shown in FIG. 9, a third user interface 30 includes a third switch 301, and an initial state of the third switch can be an off state. When the user clicks the third switch (as shown in (a) of FIG. 9), the third switch switches from the off state to the on state (as shown in (b) of FIG. 9). At the same time, no permission is granted to any object to view the comment information of the respective creation commented by non-friends of him, and the target object is granted the permission to view the respective creation commented by friends of the target object and the comment information under the respective creation. That is, any object cannot view the comment information of the respective creation commented by non-friends of him. For example, any object TA cannot view the comments of non-friends of TA under the author's creation.

If the third user interface 30 and the first user interface are a same interface, take the first user interface 10 as an example, as shown in FIG. 10, when the user clicks the third switch (as shown in (a) of FIG. 10), the third switch changes from the off state to the on state (as shown in (b) of FIG. 10). Except for different interface displays, the operation process is the same as the embodiments described in FIG. 6, and will not be repeated here.

The author can set permission for a specific user (not required to be a friend of the author), so that TA cannot view the comments of non-friends of TA under the author's creation.

In practical application, the third user interface 30 and the first user interface 10 or the second user interface 20 can be a same interface or different interfaces, which can be flexibly configured. In addition, the third switch is similar to the first switch, and an icon and a position of the third switch are not specifically limited.

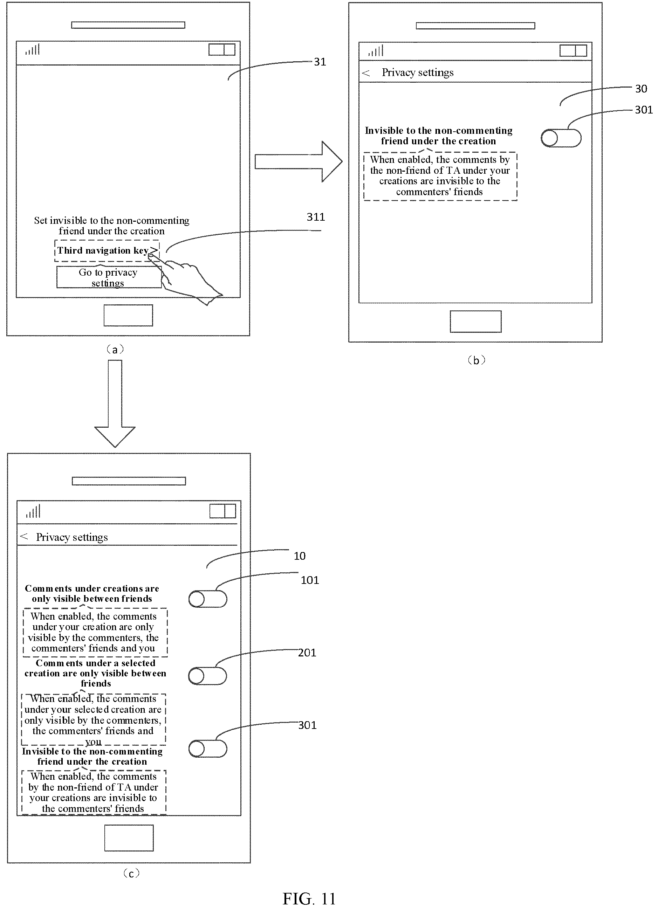

In a scenario, as shown in FIG. 11, FIG. 11 is a schematic diagram of a scenario of an information processing method according to a yet another embodiment of the present disclosure. On the basis of the above embodiments, the embodiment of the present disclosure displays, for example, a third navigation key for setting the privacy permission of the associated object corresponding to the user in the target application.

Before in response to an enabling trigger operation acting on the third switch, the method further includes:
in response to a trigger operation of the third navigation key, displaying a third user interface including the third switch, and the third switch is in an off state.

In this embodiment, the user opens the target application, and a third navigation key 311 is configured at a certain position in the target application. The third navigation key can be displayed on a switching page corresponding to the target application, such as a third graphical user interface 31 shown in (a) of FIG. 11. At the same time, navigation information, such as "go to privacy settings" and other information, can be displayed on the third navigation key 311.

Specifically, when the user clicks the third navigation key 311 (as shown in (a) of FIG. 11), the third graphical user interface 31 jumps to the third user interface 30 (as shown in (b) of FIG. 11) or a first user interface 10 (as shown in (c) of FIG. 11), and the third switch is displayed on the third user interface. At this time, a state of the third switch can be an off state or an on state. Exemplary, it is usually defaulted that an initial state of the third switch is the off state, as shown in (a) of FIG. 11.

It should be noted that an icon of the third switch and a position of the third switch are not specifically limited. In addition, an interface and a position of the third navigation key in FIG. 11 are only exemplary, and the present disclosure does not make specific restrictions on this, but can customize settings according to actual applications.

Optionally, the third navigation key, and the position of the third navigation key can be customized, or the position of the third navigation key can be flexibly moved, which realizes flexible configuration.

The information processing method provided in the present disclosure, the visibility of comments under the creations of the user, is only related to whether a consumer (such as an object of viewing, browsing, viewing creations, etc.) is a friend of the commenter, and global creations can be set. In addition, the corresponding permission can also be set through other switches for different dimensions, and a switch control is in the hands of the author of the creation. Through flexible configuration, users can balance the interaction effect of the public domain with the privacy requirement of the private domain, and solve the limitations of the existing technology.

Therefore, the present disclosure realizes that social users can also obtain a balanced privacy experience in a comment interaction within public domain traffic. At the same time, it solves the problem that the author's comments need to be specially handled, and it is implemented by the solution of "assuming that the author's friends equal to all people".

An embodiment of the present disclosure provides an information processing apparatus corresponding to the information processing method of the embodiments disclosed above. The information processing apparatus may include a terminal device. A user is provided with a target application for publishing a creation through a terminal device, and the target application includes a first switch. For the ease of explanation, only parts related to the embodiment of the present disclosure are shown. The information processing apparatus may include:
a first authorization module, configured to perform a first authorization operation for each creation published by the user on the target application, in response to an enabling trigger operation acting on the first switch, where the first authorization operation is a target authorization operation matching the first switch; the first authorization operation is used to represent that the user, a commenter corresponding to comment information under the respective creation published by the user on the target application, and a friend of the commenter are granted permission to view the respective creation and each piece of comment information under the respective creation; and the friend of the commenter is used to represent an associated object associated with an account of the commenter.

The authorization module provided by the embodiment of the present disclosure is configured to provide a user with a target application for publishing a creation through a terminal device, and the target application may include a first switch, when the user triggers an opening operation of the first switch, in response to an enabling trigger operation acting on the first switch, a respective creation published by the user on the target application is authorized. Specifically, the user, a commenter corresponding to the comment information under each creation, and a friend of the commenter are granted to view a respective creation and its comment information, realizing that social users can also obtain a balanced privacy experience in a comment interaction within public domain traffic.

The apparatus provided by the embodiment of the present disclosure can be used to implement the technical solution of the embodiment of the information processing method described in any one of the first aspects above. The implementation principles and technical effects therebetween are similar, and will not be repeated in the embodiments of the present disclosure.

**In** one embodiment of the present disclosure, the embodiment of the present disclosure gives a detailed description of the information processing apparatus on the basis of the above disclosed embodiments. The first authorization module is specifically configured to:
in response to the enabling trigger operation acting on the first switch, acquire the commenter corresponding to the comment information under the respective creation published by the user on the target application; acquire identification information of the commenter; send a request to access a friend list to a client used by the commenter according to the identification information of the commenter, and acquire identification information of the friend of the commenter if feedback information agreeing to the request to access is received; respectively grant, according to identification information of the user, the identification information of the commenter, and the identification information of the friend of the commenter, the user, the commenter and the friend of the commenter the permission to view the respective creation and each piece of comment information under the respective creation.

In an embodiment of the present disclosure, the first authorization module is further configured to: grant the user and the commenter the permission to view the respective creation and each piece of comment information under the respective creation when the first switch is in an off state.

In an embodiment of the present disclosure, the information processing apparatus further includes: a first displaying module; the first displaying module is configured to display a first navigation key for setting privacy permission for all creations of the user in the target application.

In an embodiment of the present disclosure, the user is provided with a target application for publishing creations through a terminal device, and the target application includes a second switch. For the ease of explanation, only parts related to the embodiment of the present disclosure are shown. The information processing apparatus may include: a second authorization module; the second authorization module is configured to: perform a second authorization operation for a target creation published by the user on the target application, in response to an enabling trigger operation acting on the second switch, where the target creation is any of all creations published by the user on the target application; the second authorization operation is used to represent that the user, a target commenter corresponding to comment information under the target creation and a friend of the target commenter are granted permission to view the target creation and the comment information under the target creation, and the friend of the target commenter is used to represent an associated object associated with an account of the target commenter.

In an embodiment of the present disclosure, the information processing apparatus further includes: a second displaying module; and the second displaying module is configured to display a second navigation key used to set privacy permission of the target creation on an interface where the target creation is located.

In an embodiment of the present disclosure, a user is provided with a target application for publishing a creation through a terminal device, and the target application includes a third switch. For the ease of explanation, only parts related to the embodiment of the present disclosure are shown. The information processing apparatus may include: a third authorization module; the third authorization module is configured to:
perform a third authorization operation for a target object, in response to an enabling trigger operation acting on the third switch, where the third authorization operation is a target authorization operation matching the third switch; the third authorization operation is used to represent that the target object is granted permission to view a respective creation commented by a friend of the target object and comment information under the respective creation, and the target object is any object.

In an embodiment of the present disclosure, the information processing apparatus further includes: a third displaying module; and the third displaying module is configured to display a third navigation key used to set privacy permission of the associated object corresponding to the user in an associated object list in the target application.

In one embodiment of the present disclosure, a new creation or a historical creation published by the user is used for display on a target terminal device used by an authorization object with permission to view a creation and/or view comment information under the creation.

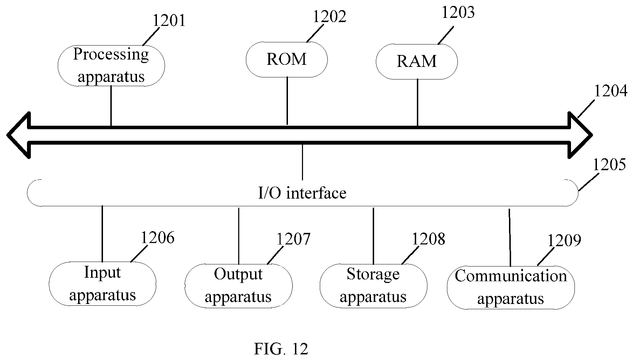

Referring to FIG. 12, it shows a structural schematic diagram of an electronic device suitable for implementing the embodiments of the present disclosure, and the electronic device may be a terminal device or a server. The terminal device may include, but is not limited to, a mobile terminal, such as a mobile phone, a notebook computer, a digital broadcast receiver, a personal digital assistant (PDA), a portable android device (PAD), a portable media player (PMP), an in-vehicle terminal (for example, an in-vehicle navigation terminal), and a fixed terminal, such as a digital television, a desktop computer. The electronic device shown in FIG. 12 is merely an example, and should not bring about any limitation to functions and usage scopes of the embodiments of the present disclosure.

As shown in FIG. 12, the electronic device may include a processing apparatus (for example, a central processor, a graphic processor, etc.) 1201, which may perform various appropriate actions and processing according to a program stored in a read only memory (ROM) 1202 or a program loaded from a storage apparatus 1208 to a random access memory (RAM) 1203. In the RAM 1203, various programs and data required for operations of the electronic device 1200 may also be stored. The processing apparatus 1201, the ROM 1202, and the RAM 1203 are connected to each other by a bus 1204. An input/output (I/O) interface 1205 is also connected to the bus 1204.

Generally, the following apparatuses may connect to the I/O interface 1205: an input apparatus 1206, which includes, for example, a touch screen, a touch pad, a keyboard, a mouse, a camera, a microphone, an accelerometer, a gyroscope, etc.; an output apparatus 1207, which includes, for example, a liquid crystal display (LCD), a speaker, a vibrator, etc.; a storage apparatus 1208, which includes, for example, a magnetic tape, a hard disk, etc.; and a communication apparatus 1209. The communication apparatus 1209 may allow the electronic device 900 to communicate with other devices in a wireless or wired way, to exchange data. Although FIG. 12 shows an electronic device having various apparatuses, it should be understood that it is not required to implement or have all of the shown apparatuses. It is alternatively possible to implement or have more or fewer apparatuses.

In particular, according to an embodiment of the present disclosure, processes described above with reference to flowchart may be implemented as a computer software program. For example, an embodiment of the present disclosure includes a computer program product, which includes a computer program carried on a computer readable medium, and the computer program contains program codes used for executing the method shown in the flowchart. In such embodiment, the computer program may be downloaded and installed from a network via the communication apparatus 1209, or installed from the storage apparatus 1208, or installed from the ROM 1202. When the computer program is executed by the processing apparatus 1201, the above functions defined in the method of the embodiments of the present disclosure are performed.

An embodiment of the present disclosure further provides a computer program that, which is stored in a readable storage medium. One or more processors of an electronic device can read the computer program from the readable storage medium, and one or more processors can execute the computer program, so that the electronic device can execute a solution provided by any of the above embodiments.

It should be noted that the above computer readable medium in the present disclosure may be a computer readable signal medium, or a computer readable storage medium, or any combination of both. The computer readable storage medium may be, for example, but is not limited to, an electrical, magnetic, optical, electromagnetic, infrared, or semiconductor system, apparatus, or components, or any combination thereof. More specific examples of the computer readable storage medium may include, but is not limited to: an electrical connection with one or more wires, a portable computer disk, a hard disk, a random access memory (RAM), a read only memory (ROM), an erasable programmable read only memory (EPROM or a flash memory), an optical fiber, a portable compact disc read only memory (CD-ROM), an optical storage component, a magnetic storage component, or any suitable combination thereof. In the present disclosure, a computer readable storage medium may be any tangible medium that contains or stores a program, and the program may be used by or in combination with an instruction execution system, apparatus, or component. In the present disclosure, a computer readable signal medium may include a data signal propagated in a baseband or as a part of a carrier, and the data signal carries computer readable program codes. Such propagated data signal may take various forms, including but not limited to an electromagnetic signal, an optical signal, or any suitable combination thereof. The computer readable signal medium may also be any computer readable medium other than the computer readable storage medium, and the computer readable signal medium may send, propagate, or transmit a program which is used by or in combination with the instruction execution system, apparatus, or component. The program codes contained in the computer readable medium may be transmitted by any suitable medium, including but is not limited to: a wire, an optical cable, a radio frequency (RF), etc., or any suitable combination thereof.

The above computer readable medium may be included in the above electronic device; or may exist alone without being assembled into the electronic device.

The computer program codes used to perform operations of the present disclosure may be written in one or more programming languages or a combination thereof, the above programming languages include object-oriented programming languages, such as Java, Smalltalk, C++, and also include conventional procedural programming languages, such as "C" language or similar programming language. The program codes may be executed entirely on a user's computer, executed partly on a user's computer, executed as an independent software package, executed partly on a user's computer and partly on a remote computer, or executed entirely on a remote computer or a server. In the case of a remote computer involved, the remote computer may connect to the user's computer through any kind of networks, which includes a local area network (LAN) or a wide area network (WAN), or, the remote computer may connect to an external computer (for example, connect to the external computer via the Internet by utilizing an internet service provider).

Flowcharts and block diagrams in the accompanying drawings illustrate architectures, functions, and operations of possible implementations of systems, methods and computer program products according to various embodiments of the present disclosure. In this regard, each block in the flowcharts or block diagrams may represent a module, a program segment, or a part of codes, and the module, the program segment, or the part of codes contains one or more executable instructions used for realizing specified logic functions. It should also be noted that in some alternative implementations, functions marked in the block may also occur in an order different from the order marked in the accompanying drawings. For example, two blocks shown in succession may actually be performed substantially in parallel, and they may sometimes be performed in a reverse order, depending on the functions involved. It should also be noted that each block in the block diagrams and/or the flowcharts as well as combinations of blocks in the block diagrams and/or the flowcharts may be implemented by a dedicated hardware-based system that performs specified functions or operations, or may be implemented by a combination of dedicated hardware and computer instructions.

Units involved in the embodiments described in the present disclosure may be implemented in a software or hardware manner. A name of a unit does not constitute a limitation on the unit itself under certain circumstances, for example, a first acquiring unit may also be described as "a unit for acquiring at least two internet protocol addresses".

The functions herein described above may be performed at least in part by one or more hardware logic assemblies. For example, without limitation, exemplary types of hardware logic assemblies that may be used include: a field programmable gate array (FPGA), an application specific integrated circuit (ASIC), an application specific standard product (ASSP), a system on chip (SOC), a complex programmable logic device (CPLD), etc.

In the context of the present disclosure, a machine readable medium may be a tangible medium that may contain or store a program to be used by or in combination with an instruction execution system, apparatus, or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination thereof. More specific examples of the machine readable storage medium would include an electrical connection based on one or more wires, a portable computer disk, a hard disk, a random access memory (RAM), a read only memory (ROM), an erasable programmable read only memory (EPROM or a flash memory), an optical fiber, a portable compact disc read only memory (CD-ROM), an optical storage device, a magnetic storage device, or any suitable combination thereof.

In a first aspect, an embodiment of the present disclosure provides an information processing method, where a user is provided with a target application for publishing a creation through a terminal device, the target application includes a first switch, and the method includes:
performing a first authorization operation for each creation published by the user on the target application, in response to an enabling trigger operation acting on the first switch, where the first authorization operation is a target authorization operation matching the first switch;
where the first authorization operation is used to represent that the user, a commenter corresponding to comment information under the respective creation published by the user on the target application, and a friend of the commenter are granted permission to view the respective creation and each comment information under the respective creation; and the friend of the commenter is used to represent an associated object associated with an account of the commenter.

According to one or more embodiments of the present disclosure, the performing the first authorization operation for the respective creation published by the user on the target application, in response to the enabling trigger operation acting on the first switch includes:
in response to the enabling trigger operation acting on the first switch, acquiring the commenter corresponding to the comment information under the respective creation published by the user on the target application;
acquiring identification information of the commenter;
sending a request to access a friend list to a client used by the commenter according to the identification information of the commenter, and acquiring identification information of the friend of the commenter if feedback information agreeing to the request to access is received; and
respectively granting, according to identification information of the user, the identification information of the commenter, and the identification information of the friend of the commenter, the user, the commenter and the friend of the commenter the permission to view the respective creation and each piece of comment information under the respective creation.

According to one or more embodiments of the present disclosure, the method further includes:
granting the user and the commenter the permission to view the respective creation and each piece of comment information under the respective creation when the first switch is in an off state.

In a second aspect, an embodiment of the present disclosure provides an information processing method, where a user is provided with a target application for publishing a creation through a terminal device, the target application includes a second switch, and the method includes:
performing a second authorization operation for a target creation published by the user on the target application, in response to an enabling trigger operation acting on the second switch, where the target creation is any of all creations published by the user on the target application;
where the second authorization operation is used to represent that the user, a target commenter corresponding to comment information under the target creation and a friend of the target commenter are granted permission to view the target creation and the comment information under the target creation, and the friend of the target commenter is used to represent an associated object associated with an account of the target commenter.

According to one or more embodiments of the present disclosure, a second navigation key used to set privacy permission of the target creation is displayed on an interface where the target creation is located.

In a third aspect, an embodiment of the present disclosure provides an information processing method, where a user is provided with a target application for publishing a creation through a terminal device, and the target application includes a third switch, and the method includes:
performing a third authorization operation for a target object, in response to an enabling trigger operation acting on the third switch, where the third authorization operation is a target authorization operation matching the third switch;
where the third authorization operation is used to represent that the target object is granted permission to view a respective creation commented by a friend of the target object and comment information under the respective creation, and the target object is any object.

According to one or more embodiments of the present disclosure, a third navigation key used to set privacy permission of an associated object corresponding to the user is displayed in an associated object list in the target application.

According to one or more embodiments of the present disclosure, the method further includes:
a new creation or a historical creation published by the user is used for display on a target terminal device used by an authorization object with permission to view a creation and/or view comment information under the creation.

In a fourth aspect, an embodiment of the present disclosure provides an information processing apparatus, where a user is provided with a target application for publishing a creation through a terminal device, and the target application includes a first switch, and the apparatus includes:
a first authorization module, configured to perform a first authorization operation for a respective creation published by the user on the target application, in response to an enabling trigger operation acting on the first switch, where the first authorization operation is a target authorization operation matching the first switch;
where the first authorization operation is used to represent that the user, a commenter corresponding to comment information under the respective creation published by the user on the target application, and a friend of the commenter are granted permission to view the respective creation and each piece of comment information under the respective creation; and the friend of the commenter is used to represent an associated object associated with an account of the commenter.

According to one or more embodiments of the present disclosure, the first authorization module is specifically configured to:
in response to the enabling trigger operation acting on the first switch, acquire the commenter corresponding to the comment information under the respective creation published by the user on the target application; acquire identification information of the commenter; send a request to access a friend list to a client used by the commenter according to the identification information of the commenter, and acquire identification information of the friend of the commenter if feedback information agreeing to the request to access is received; respectively grant, according to identification information of the user, the identification information of the commenter, and the identification information of the friend of the commenter, the user, the commenter and the friend of the commenter the permission to view the respective creation and each piece of comment information under the respective creation.

According to one or more embodiments of the present disclosure, the first authorization module is further configured to: grant the user and the commenter the permission to view the respective creation and each piece of comment information under the respective creation when the first switch is in an off state.

According to one or more embodiments of the present disclosure, the information processing apparatus further includes: a first displaying module; the first displaying module is configured to display first navigation key for setting privacy permission for all creations of the user is displayed in the target application.

In a fifth aspect, an embodiment of the present disclosure provides an information processing apparatus, where a user is provided with a target application for publishing a creation through a terminal device, the target application includes a second switch, and the apparatus includes:
a second authorization module, configured to perform a second authorization operation for a target creation published by the user on the target application, in response to an enabling trigger operation acting on the second switch, where the target creation is any of all creations published by the user on the target application.
where the second authorization operation is used to represent that the user, a target commenter corresponding to comment information under the target creation and a friend of the target commenter are granted permission to view the target creation and the comment information under the target creation, and the friend of the target commenter is used to represent an associated object associated with an account of the target commenter.

According to one or more embodiments of the present disclosure, the information processing apparatus further includes: a second displaying module; the second displaying module is configured to display a second navigation key used to set privacy permission of the target creation on an interface where the target creation is located.

In a sixth aspect, an embodiment of the present disclosure provides an information processing apparatus, where a user is provided with a target application for publishing a creation through a terminal device, the target application includes a third switch, and the apparatus includes:
a third authorization module, configured to perform a third authorization operation for a target object, in response to an enabling trigger operation acting on the third switch; where the third authorization operation is a target authorization operation matching the third switch;
where the third authorization operation is used to represent that the target object is granted permission to view a respective creation commented by a friend of the target object and comment information under the respective creation, and the target object is any object.

According to one or more embodiments of the present disclosure, the information processing apparatus further includes: a third displaying module; the third displaying module is configured to display a third navigation key used to set privacy permission of an associated object corresponding to the user in an associated object list in the target application.

According to one or more embodiments of the present disclosure, a new creation or a historical creation published by the user is used for display on a target terminal device used by an authorization object with permission to view a creation and/or view comment information under the creation.

In a seventh aspect, an embodiment of the present disclosure provides an electronic device,
including: at least one processor; and a memory;
the memory stores computer execution instructions;
the at least one processor executes the computer execution instructions stored in the memory to enable the at least one processor to execute the information processing method according to any one of the first aspect, the second aspect, and the third aspect.

In an eighth aspect, an embodiment of the present disclosure provides a computer-readable storage medium, where the computer-readable storage medium stores computer execution instructions, when the processor executes the computer execution instructions, the information processing method according to any one of the first aspect, the second aspect, and the third aspect is executed.

In a ninth aspect, an embodiment of the present disclosure further provides a computer program product, which includes: a computer program, the computer program is stored in a readable storage medium, one or more processor of an electronic device can read the computer program from the readable storage medium, the one or more processor executes the computer program, so that the electronic device executes the information processing method according to any one of the first aspect, the second aspect, and the third aspect.

In a tenth aspect, an embodiment of the present disclosure further provides a computer program, which is stored in a readable storage medium, one or more processor of an electronic device can read the computer program from the readable storage medium, the one or more processor executes the computer program to enable the electronic device executes the information processing method according to any one of the first aspect, the second aspect, and the third aspect.

The above description is merely illustration of preferred embodiments of the present disclosure and applied technical principles. Those skilled in the art should understand that the disclosed scope involved in the present disclosure is not limited to technical solutions formed by a specific combination of the above technical features, and should also cover other technical solutions formed by any combination of the above technical features or equivalent features thereof without departing from the above disclosed concept, for example, a technical solution formed by replacing the above features with technical features having similar functions as the above features and being disclosed in the present disclosure (without limitation).

In addition, although operations are depicted in a specific order, this should not be understood as requiring these operations to be performed in the specific order as shown or in a sequential order. Under certain circumstances, multitasking and parallel processing may be advantageous. Likewise, although several specific implementation details are included in the above discussion, these should not be construed as limiting the scope of the present disclosure. Certain features that are described in the context of separate embodiments may also be implemented in combination in a single embodiment. Conversely, various features described in the context of a single embodiment may also be implemented in multiple embodiments individually or in any suitable subcombination.

Although the present subject matter has been described in language specific to structural features and/or method logical actions, it should be understood that the subject matter defined in the appended claims is not necessarily limited to the specific features or actions described above. Conversely, the specific features and actions described above are merely example forms for implementing the claims.

## Claims

1. An information processing method, wherein a user is provided with a target application for publishing a creation through a terminal device, the target application comprises a first switch, and the method comprises:
performing a first authorization operation for a respective creation published by the user on the target application, in response to an enabling trigger operation acting on the first switch, wherein the first authorization operation is a target authorization operation matching the first switch;
wherein the first authorization operation is used to represent that the user, a commenter corresponding to comment information under the respective creation published by the user on the target application, and a friend of the commenter are granted permission to view the respective creation and each comment information under the respective creation; and the friend of the commenter refers to an associated object associated with an account of the commenter;
**characterized in that** the comment information comprises primary comment information and secondary comment information, the primary comment information is initial comment information of the user or the commenter on the creation, and the secondary comment information is information that a first target object comments on the basis of the primary comment information, and the first target object comprises the user and the commenter;
the method further comprises:
when the first switch is in an off state, granting permission to the user and the commenter to view the respective creation and the primary comment information and the secondary comment information under the respective creation, and not granting permission to the friend of the commenter to view the respective creation and the primary comment information and the secondary comment information under the respective creation;
wherein the target application further comprises a second switch, and the method further comprises:
performing a second authorization operation for a target creation published by the user on the target application, in response to an enabling trigger operation acting on the second switch, wherein the target creation is any of all creations published by the user on the target application;
wherein the second authorization operation is used to represent that the user, a target commenter corresponding to comment information under the target creation and a friend of the target commenter are granted permission to view the target creation and the comment information under the target creation, and the friend of the target commenter refers to an associated object associated with an account of the target commenter;
wherein the second authorization operation is prioritized for performing compared to operations performed corresponding to the first switch being in an on state or an off state, and the first switch and the second switch are on the same interface.

2. The method according to claim 1, wherein the performing the first authorization operation for the respective creation published by the user on the target application, in response to the enabling trigger operation acting on the first switch comprises:
in response to the enabling trigger operation acting on the first switch, acquiring (301) the commenter corresponding to the comment information under the respective creation published by the user on the target application;
acquiring (302) identification information of the commenter;
sending (303) a request to access a friend list to a client used by the commenter according to the identification information of the commenter, and acquiring identification information of the friend of the commenter if feedback information agreeing to the request to access is received; and
respectively granting (304), according to identification information of the user, the identification information of the commenter, and the identification information of the friend of the commenter, the user, the commenter and the friend of the commenter the permission to view the respective creation and each piece of comment information under the respective creation.

3. The method according to claim 1 or 2, further comprising: displaying a first navigation key for setting privacy permission for all creations of the user in the target application.

4. The method according to any one of claims 1 to 3, further comprising: displaying a second navigation key used to set privacy permission of the target creation on an interface where the target creation is located.

5. The method according to claim 4, wherein the target application further comprises a third switch, and the method further comprises:
performing a third authorization operation for a target object, in response to an enabling trigger operation acting on the third switch, wherein the third authorization operation is a target authorization operation matching the third switch;
wherein the third authorization operation is used to represent that the target object is granted permission to view a respective creation commented by a friend of the target object and comment information under the respective creation, and the target object is any object;
wherein the third authorization operation is prioritized for performing compared to the second authorization operation and operations performed corresponding to the first switch being in an on state or an off state.

6. The method according to claim 5, wherein a third navigation key used to set privacy permission of an associated object corresponding to the user is displayed in an associated object list in the target application.

7. The method according to any one of claims 1 to 6, wherein the method further comprises:
a new creation or a historical creation published by the user is used for display on a target terminal device used by an authorization object with permission to view a creation and/or view comment information under the creation.

8. An information processing apparatus, wherein a user is provided with a target application for publishing a creation through a terminal device, the target application comprises a first switch, and the apparatus comprises:
a first authorization module, configured to perform a first authorization operation for a respective creation published by the user on the target application, in response to an enabling trigger operation acting on the first switch, wherein the first authorization operation is a target authorization operation matching the first switch;
wherein the first authorization operation is used to represent that the user, a commenter corresponding to comment information under the respective creation published by the user on the target application, and a friend of the commenter are granted permission to view the respective creation and each piece of comment information under the respective creation; and the friend of the commenter refers to an associated object associated with an account of the commenter;
**characterized in that** the comment information comprises primary comment information and secondary comment information, the primary comment information is initial comment information of the user or the commenter on the creation, and the secondary comment information is information that a first target object comments on the basis of the primary comment information, and the first target object comprises the user and the commenter;
the first authorization module is further configured to:
when the first switch is in an off state, grant permission to the user and the commenter to view the respective creation and the primary comment information and the secondary comment information under the respective creation, and not grant permission to the friend of the commenter to view the respective creation and the primary comment information and the secondary comment information under the respective creation;
wherein the target application further comprises a second switch, and the apparatus further comprises:
a second authorization module, configured to perform a second authorization operation for a target creation published by the user on the target application, in response to an enabling trigger operation acting on the second switch, wherein the target creation is any of all creations published by the user on the target application;
wherein the second authorization operation is used to represent that the user, a target commenter corresponding to comment information under the target creation and a friend of the target commenter are granted permission to view the target creation and the comment information under the target creation, and the friend of the target commenter refers to an associated object associated with an account of the target commenter;
wherein the second authorization operation is prioritized for performing compared to operations performed corresponding to the first switch being in an on state or an off state, and the first switch and the second switch are on the same interface.

9. The apparatus according to claim 8, wherein the target application further comprises a third switch, and the apparatus further comprises:
a third authorization module, configured to perform a third authorization operation for a target object, in response to an enabling trigger operation acting on the third switch; wherein the third authorization operation is a target authorization operation matching the third switch;
wherein the third authorization operation is used to represent that the target object is granted permission to view a respective creation commented by a friend of the target object and comment information under the respective creation, and the target object is any object;
wherein the third authorization operation is prioritized for performing compared to the second authorization operation and operations performed corresponding to the first switch being in an on state or an off state.

10. A computer-readable storage medium, wherein the computer-readable storage medium stores computer execution instructions, when the processor executes the computer execution instructions, the information processing method according to any one of claims 1 to 7 is implemented.

11. A computer program product, comprising computer program instructions, and the computer program instructions enable a computer to execute the information processing method according to any one of claims 1 to 7.

## Patentansprüche

1. Informationsverarbeitungsverfahren, wobei einem Benutzer eine Zielanwendung zum Veröffentlichen einer Kreation über eine Endgerätevorrichtung bereitgestellt wird, die Zielanwendung einen ersten Schalter umfasst und das Verfahren Folgendes umfasst:
Durchführen einer ersten Autorisierungsoperation für eine jeweilige Kreation, die vom Benutzer auf der Zielanwendung veröffentlicht wurde, als Reaktion auf eine Aktivierungs-Trigger-Operation, die auf den ersten Schalter wirkt, wobei die erste Autorisierungsoperation eine Zielautorisierungsoperation ist, die mit dem ersten Schalter übereinstimmt;
wobei die erste Autorisierungsoperation zum Darstellen verwendet wird, dass dem Benutzer, einem Kommentator, der den Kommentarinformationen unter der jeweiligen vom Benutzer auf der Zielanwendung veröffentlichten Kreation entspricht, und einem Freund des Kommentators die Berechtigung erteilt wird, die jeweilige Kreation und alle Kommentarinformationen unter der jeweiligen Kreation einzusehen; und dass sich der Freund des Kommentators auf ein zugehöriges Objekt bezieht, das einem Konto des Kommentators zugeordnet ist;
**dadurch gekennzeichnet, dass** die Kommentarinformationen primäre Kommentarinformationen und sekundäre Kommentarinformationen umfassen, wobei die primären Kommentarinformationen die ursprünglichen Kommentarinformationen des Benutzers oder des Kommentators bei der Kreation sind und die sekundären Kommentarinformationen Informationen sind, die ein erstes Zielobjekt auf der Grundlage der primären Kommentarinformationen kommentieren, und wobei das erste Zielobjekt den Benutzer und den Kommentator umfasst;
wobei das Verfahren weiter Folgendes umfasst:
wenn der erste Schalter ausgeschaltet ist, Erteilen der Berechtigung an den Benutzer und den Kommentator, die jeweilige Kreation sowie die primären Kommentarinformationen und die sekundären Kommentarinformationen unter der jeweiligen Kreation einzusehen, jedoch kein Erteilen der Berechtigung an den Freund des Kommentators, die jeweilige Kreation sowie die primären Kommentarinformationen und die sekundären Kommentarinformationen unter der jeweiligen Kreation einzusehen;
wobei die Zielanwendung weiter einen zweiten Schalter umfasst und das Verfahren weiter Folgendes umfasst:
Durchführen einer zweiten Autorisierungsoperation für eine vom Benutzer auf der Zielanwendung veröffentlichte Zielkreation als Reaktion auf eine Aktivierungs-Trigger-Operation, die auf den zweiten Schalter wirkt, wobei es sich bei der Zielkreation um eine beliebige aller vom Benutzer auf der Zielanwendung veröffentlichten Kreationen handelt;
wobei die zweite Autorisierungsoperation zum Darstellen verwendet wird, dass dem Benutzer, einem Zielkommentator, der den Kommentarinformationen unter der Zielkreation entspricht, und einem Freund des Zielkommentators die Berechtigung erteilt wird, die Zielkreation und die Kommentarinformationen unter der Zielkreation einzusehen, und dass sich der Freund des Zielkommentators auf ein zugehöriges Objekt bezieht, das einem Konto des Zielkommentators zugeordnet ist;
wobei die zweite Autorisierungsoperation gegenüber Operationen, die entsprechend dem ersten Schalter in einem Ein-Zustand oder einem Aus-Zustand durchgeführt werden, für Durchführen priorisiert wird und der erste Schalter und der zweite Schalter sich auf derselben Schnittstelle befinden.

2. Verfahren nach Anspruch 1, wobei das Durchführen der ersten Autorisierungsoperation für die jeweilige Kreation, die vom Benutzer auf der Zielanwendung veröffentlicht wurde, als Reaktion auf die Aktivierungs-Trigger-Operation, die auf den ersten Schalter wirkt, Folgendes umfasst:
als Reaktion auf die Aktivierungs-Trigger-Operation, die auf den ersten Schalter wirkt, Erfassen (301) des Kommentators, der den Kommentarinformationen unter der jeweiligen Kreation entspricht, die vom Benutzer auf der Zielanwendung veröffentlicht wurde;
Erfassen (302) von Identifikationsinformationen des Kommentators;
Senden (303) einer Anfrage zum Zugriff auf eine Freundesliste an einen vom Kommentator verwendeten Client gemäß den Identifikationsinformationen des Kommentators und Erfassen der Identifikationsinformationen des Freundes des Kommentators, wenn eine Rückmeldung empfangen wird, die der Anfrage zum Zugriff zustimmt; und
jeweils Erteilen (304) der Berechtigung, gemäß den Identifikationsinformationen des Benutzers, der Identifikationsinformationen des Kommentators und der Identifikationsinformationen des Freundes des Kommentators, an den Benutzer, den Kommentator und den Freund des Kommentators, die jeweilige Kreation und jeden einzelnen Kommentar unter der jeweiligen Kreation einzusehen.

3. Verfahren nach Anspruch 1 oder 2, weiter umfassend: Anzeigen einer ersten Navigationstaste zum Einstellen der Datenschutzberechtigung für alle Kreationen des Benutzers in der Zielanwendung.

4. Verfahren nach einem der Ansprüche 1 bis 3, weiter umfassend: Anzeigen einer zweiten Navigationstaste, die zum Einstellen der Datenschutzberechtigung für die Zielkreation auf einer Schnittstelle verwendet wird, auf der sich die Zielkreation befindet.

5. Verfahren nach Anspruch 4, wobei die Zielanwendung weiter einen dritten Schalter umfasst und das Verfahren weiter Folgendes umfasst:
Durchführen einer dritten Autorisierungsoperation für ein Zielobjekt als Reaktion auf eine Aktivierungs-Trigger-Operation, die auf den dritten Schalter wirkt, wobei die dritte Autorisierungsoperation eine Zielautorisierungsoperation ist, die mit dem dritten Schalter übereinstimmt;
wobei die dritte Autorisierungsoperation zum Darstellen verwendet wird, dass dem Zielobjekt die Berechtigung erteilt wird, eine jeweilige Kreation einzusehen, die von einem Freund des Zielobjekts kommentiert wurde, sowie Informationen unter der entsprechenden Kreation zu kommentieren, wobei es sich bei dem Zielobjekt um ein beliebiges Objekt handelt;
wobei die dritte Autorisierungsoperation gegenüber der zweiten Autorisierungsoperation und den Operationen, die entsprechend dem ersten Schalter in einem Ein-Zustand oder in einem Aus-Zustand durchgeführt werden, für Durchführen priorisiert wird.

6. Verfahren nach Anspruch 5, wobei eine dritte Navigationstaste, die zum Einstellen der Datenschutzberechtigung eines zugehörigen Objekts entsprechend dem Benutzer verwendet wird, in einer Liste zugehöriger Objekte in der Zielanwendung angezeigt wird.

7. Verfahren nach einem der Ansprüche 1 bis 6, wobei das Verfahren weiter Folgendes umfasst:
eine neue Kreation oder eine vom Benutzer veröffentlichte historische Kreation wird zur Anzeige auf einer Zielendgerätevorrichtung verwendet, das von einem Autorisierungsobjekt mit der Berechtigung zum Einsehen einer Kreation und/oder zum Einsehen von Kommentarinformationen unter der Kreation verwendet wird.

8. Informationsverarbeitungseinrichtung, wobei einem Benutzer eine Zielanwendung zum Veröffentlichen einer Kreation über eine Endgerätevorrichtung bereitgestellt wird, die Zielanwendung einen ersten Schalter umfasst und die Einrichtung Folgendes umfasst:
ein erstes Autorisierungsmodul, das zum Durchführen einer ersten Autorisierungsoperation für eine jeweilige Kreation, die vom Benutzer auf der Zielanwendung veröffentlicht wurde, konfiguriert ist, als Reaktion auf eine Aktivierungs-Trigger-Operation, die auf den ersten Schalter wirkt, wobei die erste Autorisierungsoperation eine Zielautorisierungsoperation ist, die mit dem ersten Schalter übereinstimmt;
wobei die erste Autorisierungsoperation zum Darstellen verwendet wird, dass dem Benutzer, einem Kommentator, der den Kommentarinformationen unter der jeweiligen vom Benutzer auf der Zielanwendung veröffentlichten Kreation entspricht, und einem Freund des Kommentators die Berechtigung erteilt wird, die jeweilige Kreation und alle Kommentarinformationen unter der jeweiligen Kreation einzusehen; und dass sich der Freund des Kommentators auf ein zugehöriges Objekt bezieht, das einem Konto des Kommentators zugeordnet ist;
**dadurch gekennzeichnet, dass** die Kommentarinformationen primäre Kommentarinformationen und sekundäre Kommentarinformationen umfassen, wobei die primären Kommentarinformationen die ursprünglichen Kommentarinformationen des Benutzers oder des Kommentators bei der Kreation sind und die sekundären Kommentarinformationen Informationen sind, die ein erstes Zielobjekt auf der Grundlage der primären Kommentarinformationen kommentieren, und wobei das erste Zielobjekt den Benutzer und den Kommentator umfasst;
wobei das erste Autorisierungsmodul weiter konfiguriert ist:
wenn der erste Schalter ausgeschaltet ist, Erteilen der Berechtigung an den Benutzer und den Kommentator, die jeweilige Kreation sowie die primären Kommentarinformationen und die sekundären Kommentarinformationen unter der jeweiligen Kreation einzusehen, jedoch kein Erteilen der Berechtigung an den Freund des Kommentators, die jeweilige Kreation sowie die primären Kommentarinformationen und die sekundären Kommentarinformationen unter der jeweiligen Kreation einzusehen;
wobei die Zielanwendung weiter einen zweiten Schalter umfasst und die Einrichtung weiter Folgendes umfasst:
ein zweites Autorisierungsmodul, das zum Durchführen einer zweiten Autorisierungsoperation für eine vom Benutzer auf der Zielanwendung veröffentlichte Zielkreation konfiguriert ist, als Reaktion auf eine Aktivierungs-Trigger-Operation, die auf den zweiten Schalter wirkt, wobei die Zielkreation eine beliebige aller vom Benutzer in der Zielanwendung veröffentlichten Kreationen ist;
wobei die zweite Autorisierungsoperation zum Darstellen verwendet wird, dass dem Benutzer, einem Zielkommentator, der den Kommentarinformationen unter der Zielkreation entspricht, und einem Freund des Zielkommentators die Berechtigung erteilt wird, die Zielkreation und die Kommentarinformationen unter der Zielkreation einzusehen, und dass sich der Freund des Zielkommentators auf ein zugehöriges Objekt bezieht, das einem Konto des Zielkommentators zugeordnet ist;
wobei die zweite Autorisierungsoperation gegenüber Operationen, die entsprechend dem ersten Schalter in einem Ein-Zustand oder einem Aus-Zustand durchgeführt werden, für Durchführen priorisiert wird und der erste Schalter und der zweite Schalter sich auf derselben Schnittstelle befinden.

9. Einrichtung nach Anspruch 8, wobei die Zielanwendung weiter einen dritten Schalter umfasst und die Einrichtung weiter Folgendes umfasst:
ein drittes Autorisierungsmodul, das zum Durchführen einer dritten Autorisierungsoperation für ein Zielobjekt konfiguriert ist, als Reaktion auf eine Aktivierungs-Trigger-Operation, die auf den dritten Schalter wirkt; wobei die dritte Autorisierungsoperation ein Zielautorisierungsoperation ist, die mit dem dritten Schalter übereinstimmt;
wobei die dritte Autorisierungsoperation zum Darstellen verwendet wird, dass dem Zielobjekt die Berechtigung erteilt wird, eine jeweilige Kreation einzusehen, die von einem Freund des Zielobjekts kommentiert wurde, sowie Informationen unter der entsprechenden Kreation zu kommentieren, wobei es sich bei dem Zielobjekt um ein beliebiges Objekt handelt;
wobei die dritte Autorisierungsoperation gegenüber der zweiten Autorisierungsoperation und den Operationen, die entsprechend dem ersten Schalter in einem Ein-Zustand oder in einem Aus-Zustand durchgeführt werden, für Durchführen priorisiert wird.

10. Computerlesbares Speichermedium, wobei das computerlesbare Speichermedium computerausführbare Anweisungen speichert, wenn der Prozessor die computerausführbaren Anweisungen ausführt, das Informationsverarbeitungsverfahren nach einem der Ansprüche 1 bis 7 implementiert wird.

11. Computerprogrammprodukt, das Computerprogrammanweisungen umfasst, und die Computerprogrammanweisungen einen Computer dazu aktivieren, das Informationsverarbeitungsverfahren nach einem der Ansprüche 1 bis 7 auszuführen.

## Revendications

1. Procédé de traitement d'informations, dans lequel un utilisateur dispose d'une application cible pour publier une création au moyen d'un terminal, l'application cible comprend un premier commutateur, et le procédé comprend :
l'exécution d'une première opération d'autorisation pour une création respective publiée par l'utilisateur sur l'application cible, à la suite d'une opération de déclenchement d'activation agissant sur le premier commutateur, dans lequel la première opération d'autorisation est une opération d'autorisation cible correspondant au premier commutateur ;
dans lequel la première opération d'autorisation est utilisée pour indiquer que l'utilisateur, un commentateur correspondant à des informations de commentaire sous la création respective publiée par l'utilisateur sur l'application cible, et un ami du commentateur sont autorisés à voir la création respective et chaque information de commentaire sous la création respective ; et l'ami du commentateur fait référence à un objet associé à un compte du commentateur ;
**caractérisé en ce que** les informations de commentaire comprennent des informations de commentaire primaires et des informations de commentaire secondaires, les informations de commentaire primaires sont des informations de commentaire initiales de l'utilisateur ou du commentateur lors de la création, et les informations de commentaire secondaires sont des informations qu'un premier objet cible commente sur la base des informations de commentaire primaires, et le premier objet cible comprend l'utilisateur et le commentateur ;
le procédé comprend en outre :
lorsque le premier commutateur est dans un état désactivé, l'octroi d'une permission à l'utilisateur et au commentateur de voir la création respective et les informations de commentaire primaires et les informations de commentaire secondaires sous la création respective, et le non octroi d'une permission à l'ami du commentateur de voir la création respective et les informations de commentaire primaires et les informations de commentaire secondaires sous la création respective ;
dans lequel l'application cible comprend en outre un deuxième commutateur, et le procédé comprend en outre :
la réalisation d'une deuxième opération d'autorisation pour une création cible publiée par l'utilisateur sur l'application cible, à la suite d'une opération de déclenchement d'activation agissant sur le deuxième commutateur, dans lequel la création cible est l'une quelconque de toutes les créations publiées par l'utilisateur sur l'application cible ;
dans lequel la deuxième opération d'autorisation est utilisée pour indiquer que l'utilisateur, un commentateur cible correspondant à des informations de commentaire sous la création cible et un ami du commentateur cible sont autorisés à voir la création cible et les informations de commentaire sous la création cible, et l'ami du commentateur cible fait référence à un objet associé qui est associé à un compte du commentateur cible ;
dans lequel la deuxième opération d'autorisation est priorisée pour être exécutée par rapport à des opérations effectuées en fonction de l'état du premier commutateur qui est dans un état activé ou dans un état désactivé, et le premier commutateur et le deuxième commutateur se trouvent sur la même interface.

2. Procédé selon la revendication 1, dans lequel l'exécution de la première opération d'autorisation pour la création respective publiée par l'utilisateur sur l'application cible, à la suite de l'opération de déclenchement d'activation agissant sur le premier commutateur, comprend :
à la suite de l'opération de déclenchement agissant sur le premier commutateur, l'acquisition (301) du commentateur correspondant aux informations de commentaire sous la création respective publiée par l'utilisateur sur l'application cible ;
l'acquisition (302) d'informations d'identification du commentateur ;
l'envoi (303) d'une demande d'accès à une liste d'amis à un client utilisé par le commentateur, selon les informations d'identification du commentateur, et l'acquisition d'informations d'identification de l'ami du commentateur si des informations de retour acceptant la demande d'accès sont reçues ; et
l'accord respectif (304), selon des informations d'identification de l'utilisateur, des informations d'identification du commentateur et des informations d'identification de l'ami du commentateur, de l'utilisateur, du commentateur et de l'ami du commentateur, de la permission de voir la création respective et chaque élément d'informations de commentaire sous la création respective.

3. Procédé selon la revendication 1 ou 2, comprenant en outre : l'affichage d'une première clé de navigation pour définir la permission de confidentialité pour toutes les créations de l'utilisateur dans l'application cible.

4. Procédé selon l'une quelconque des revendications 1 à 3, comprenant en outre : l'affichage d'une deuxième clé de navigation utilisée pour définir la permission de confidentialité de la création cible sur une interface sur laquelle la création cible se trouve.

5. Procédé selon la revendication 4, dans lequel l'application cible comprend en outre un troisième commutateur et le procédé comprend en outre :
la réalisation d'une troisième opération d'autorisation pour un objet cible, à la suite d'une opération de déclenchement d'activation agissant sur le troisième commutateur, dans lequel la troisième opération d'autorisation est une opération d'autorisation cible correspondant au troisième commutateur ;
dans lequel la troisième opération d'autorisation est utilisée pour indiquer que l'objet cible est autorisé à voir une création respective commentée par un ami de l'objet cible et des informations de commentaire sous la création respective, et l'objet cible est n'importe quel objet ;
dans lequel la troisième opération d'autorisation est priorisée pour être exécutée par rapport à la deuxième opération d'autorisation et à des opérations effectuées en fonction de l'état du premier commutateur qui est dans un état activé ou dans un état désactivé.

6. Procédé selon la revendication 5, dans lequel une troisième clé de navigation utilisée pour définir la permission de confidentialité d'un objet associé correspondant à l'utilisateur est affichée dans une liste d'objets associés dans l'application cible.

7. Procédé selon l'une quelconque des revendications 1 à 6, dans lequel le procédé comprend en outre :
une nouvelle création ou une création historique publiée par l'utilisateur est utilisée pour affichage sur un terminal cible utilisé par un objet d'autorisation avec une permission de voir une création et/ou voir des informations de commentaire sous la création.

8. Appareil de traitement d'informations, dans lequel un utilisateur dispose d'une application cible pour publier une création au moyen d'un terminal, l'application cible comprend un premier commutateur, et l'appareil comprend :
un premier module d'autorisation, configuré pour effectuer une première opération d'autorisation pour une création respective publiée par l'utilisateur sur l'application cible, à la suite d'une opération de déclenchement d'activation agissant sur le premier commutateur, dans lequel la première opération d'autorisation est une opération d'autorisation cible correspondant au premier commutateur ;
dans lequel la première opération d'autorisation est utilisée pour indiquer que l'utilisateur, un commentateur correspondant à des informations de commentaire sous la création respective publiée par l'utilisateur sur l'application cible, et un ami du commentateur sont autorisés à voir la création respective et chaque élément d'informations de commentaire sous la création respective ; et l'ami du commentateur fait référence à un objet associé qui est associé à un compte du commentateur ;
**caractérisé en ce que** les informations de commentaire comprennent des informations de commentaire primaires et des informations de commentaire secondaires, les informations de commentaire primaires sont des informations de commentaire initiales de l'utilisateur ou du commentateur lors de la création, et les informations de commentaire secondaires sont des informations qu'un premier objet cible commente sur la base des informations de commentaire primaires, et le premier objet cible comprend l'utilisateur et le commentateur ;
le premier module d'autorisation est en outre configuré pour :
lorsque le premier commutateur est dans un état désactivé, octroyer une permission à l'utilisateur et au commentateur de voir la création respective et les informations de commentaire primaires et les informations de commentaire secondaires sous la création respective, et de ne pas octroyer une permission à l'ami du commentateur de voir la création respective et les informations de commentaire primaires et les informations de commentaire secondaires sous la création respective ;
dans lequel l'application cible comprend en outre un deuxième commutateur, et l'appareil comprend en outre :
un deuxième module d'autorisation, configuré pour effectuer une deuxième opération d'autorisation pour une création cible publiée par l'utilisateur sur l'application cible, à la suite d'une opération de déclenchement d'activation agissant sur le deuxième commutateur, dans lequel la création cible est l'une quelconque de toutes les créations publiées par l'utilisateur sur l'application cible ;
dans lequel la deuxième opération d'autorisation est utilisée pour indiquer que l'utilisateur, un commentateur cible correspondant à des informations de commentaire sous la création cible et un ami du commentateur cible sont autorisés à voir la création cible et les informations de commentaire sous la création cible, et l'ami du commentateur cible fait référence à un objet associé qui est associé à un compte du commentateur cible ;
dans lequel la deuxième opération d'autorisation est priorisée pour être exécutée par rapport à des opérations effectuées en fonction de l'état du premier commutateur qui est dans un état activé ou dans un état désactivé, et le premier commutateur et le deuxième commutateur se trouvent sur la même interface.

9. Appareil selon la revendication 8, dans lequel l'application cible comprend en outre un troisième interrupteur, et l'appareil comprend en outre :
un troisième module d'autorisation, configuré pour effectuer une troisième opération d'autorisation pour un objet cible, à la suite d'une opération de déclenchement d'activation agissant sur le troisième commutateur ; dans lequel la troisième opération d'autorisation est une opération d'autorisation cible correspondant au troisième commutateur ;
dans lequel la troisième opération d'autorisation est utilisée pour indiquer que l'objet cible est autorisé à consulter une création respective commentée par un ami de l'objet cible et des informations de commentaire sous la création respective, et l'objet cible est n'importe quel objet ;
dans lequel la troisième opération d'autorisation est priorisée pour être exécutée par rapport à la deuxième opération d'autorisation et à des opérations réalisées en fonction de l'état du premier commutateur qui est dans un état activé ou dans un état désactivé.

10. Support de stockage lisible par ordinateur, dans lequel le support de stockage lisible par ordinateur stocke des instructions d'exécution d'ordinateur, lorsque le processeur exécute les instructions d'exécution informatique, le procédé de traitement d'informations selon l'une quelconque des revendications 1 à 7 est mis en œuvre.

11. Produit de programme d'ordinateur, comprenant des instructions de programme d'ordinateur, et les instructions de programme d'ordinateur permettent à un ordinateur d'exécuter le procédé de traitement d'informations selon l'une quelconque des revendications 1 à 7.
